# EUROPEAN PATENT SPECIFICATION

(11) **EP 3 433 069 B1**
(45) Date of publication and mention of the grant of the patent: **14.10.2020**
(21) Application number: 17718741.6
(22) Date of filing: 15.03.2017
(51) Int. Cl.: B29C 51/26, B29C 51/08, B29C 33/68, B29C 51/30, B29C 51/42, B29C 51/28

(54) **IMPROVED MOULD FOR PANEL PROCESSING AND METHOD**
VERBESSERTE FORM ZUR PLATTENVERARBEITUNG UND VERFAHREN
MOULE AMÉLIORÉ POUR LE TRAITEMENT DE PANNEAUX ET PROCÉDÉ

(30) Priority: 23.03.2016 IT UA20161930
(43) Date of publication of application: 30.01.2019
(73) Proprietor: Persico S.p.A., 24027 Nembro (BG) (IT)
(72) Inventor: FUMAGALLI, Giuseppe, 24045 Fara Gera d'Adda (BG) (IT); GASTALDI, Sergio, 12013 Chiusa di Pesio (CN) (IT)
(74) Representative: Tirloni, Bartolomeo
(86) International application number: PCT/IB2017/051486
(87) International publication number: WO 2017/163151

(56) References cited:
- GB-A- 2 049 535
- US-A- 3 340 714
- US-A- 5 269 997
- DATABASE WPI Week 198031 Thomson Scientific, London, GB; AN 1980-54967C XP002763991, -& SU 703 342 A (KONOKOTIN V S) 15 December 1979 (1979-12-15)

## Description

The present invention relates, in general, to fixtures for panel moulding operations, such as layer coupling, layer glueing, reflanging, and the like, wherein such operations preferably comprise a hot phase that can be useful for thermoforming the materials, or for activating an adhesive, or the like.

This is typically the case of fixtures used in the automotive industry for manufacturing some internal parts of cars, such as the front dashboard, the parcel shelf, the door panels, etc.

The documents SU703342A, GB2049535A, US5269997A disclose apparatus and process for moulding. US3340714A discloses a mould and a corresponding method in accordance with the preambles of the independent claims.

In particular, the invention relates to an improved mould used in a fixture like the one described in European patent application EP 2 962 825 by the present Applicant. Reference will be made herein to those structural and functional aspects of the mould which are useful to understand the present invention. As regards the fixtures in which the mould is used, the execution of the moulding process and other secondary aspects, reference should be made, for brevity's sake, to prior documents and/or to the above-mentioned European application.

The same applies to the panels manufactured by using the mould and to the processing thereof; in fact, the structure of the panels may vary from case to case, but the general processing steps, such as reflanging and/or hot coupling of the various layers thereof, the materials they are made of, the adhesives used, etc., are generally known to those skilled in the art.

One important aspect of the panel production process considered herein concerns the thermal heating and cooling cycles of the panels during the moulding process.

In fact, the mould described in application EP 2 962 825 has the innovative capability of reducing the length of the thermal cycles, caused by the thermal inertia of the mould parts between which a panel to be processed is inserted.

In fact, prior-art moulds are generally made up of two parts, also known as half-moulds, having a respective shaped surface with a male/female profile depending on the pieces to be coupled; the half-moulds are supported in a manner such that they can be brought close to each other into the closed condition and moved away from each other into the open condition, just like the valves of a shell.

Half-moulds are made by using metal blocks (usually steel, aluminium or alloys thereof), which, depending on the parts to be produced, may have variable dimensions and weight. However, in automotive panel applications like those referred to herein, the weight of the moulds is generally of the order of one ton. Because of this, on the one hand they have a high thermal capacity, but on the other hand they require long heating and cooling cycles.

The mould of EP 2 962 825 allows overcoming such problems, thanks to the use of inserts in the mould areas in contact with the workpiece, in which a heating liquid or a cooling liquid, depending on the operating phase of the cycle, can be made to circulate.

The inserts have smaller dimensions than the half-moulds, and therefore can be heated or cooled more quickly, thus reducing the duration of the whole process and increasing the productivity of the mould.

Aiming at further improving the performance of the mould of EP 2 962 825, the present Applicant has detected an important criticality in the surface finishing of the moulded parts.

In fact, the presence of the inserts makes it difficult to obtain moulded parts with a surface completely void of marks left by the junction lines between the inserts, or between them and the rest of the mould.

In fact, the inserts consist of metal pieces that are subject to thermal expansion and shrinking during the hot and cold phases of the production process; in order to comply with the thermal dimensional variations of the inserts, it is therefore necessary to leave a small gap between their surfaces and the adjacent surfaces of the other parts of the mould.

This inevitably leads to the creation of empty spaces into which the material of the outer layer of the panels will tend to spread, thereby causing marks or impressions similar to ribs on the surface of the final product; these marks can be aesthetically detrimental and unacceptable for some applications, and therefore a need is felt for eliminating them.

In the light of these considerations, it can therefore be stated that the technical problem at the basis of the present invention is to provide a fixture for processing thermoformable panels, wherein the term "processing" shall be understood as any operation, such as layer coupling, reflanging, thermoforming, glueing, and the like, which allows obtaining a surface finish of the processed pieces that shows no marks caused by gaps between the above-mentioned inserts or anyway between the parts of the moulds.

The idea that solves this problem is to interpose a compensation sheet or layer in accordance with the independent claims.

In this manner, the gaps between the mould inserts can be covered while still preserving the desired profile of the workpiece surface.

The features of the invention are specifically set out in the claims appended to this description; the present invention further includes a panel moulding process, the features of which are also specified in the appended claims.

The invention as a whole will become more apparent in the light of the following description of one possible embodiment thereof, which is provided herein merely as an illustrative, non-limiting example with reference to the annexed drawings, wherein:
- fig. 1 is a longitudinal sectional view of a part of a mould according to the invention;

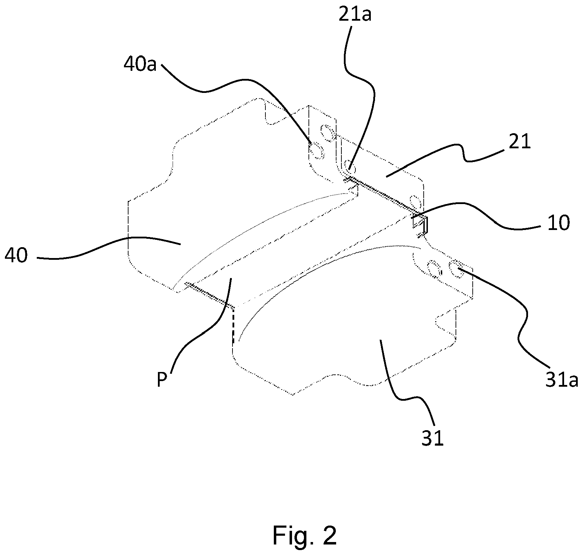

- fig. 2 is a perspective view of some inserts of the mould of figure 1.

For simplicity and clarity, those mould parts which are not strictly necessary for understanding the invention have been omitted in the above-listed drawings.

Nevertheless, for further information about the moulds and the panel processing method involved herein, reference can be made to the prior art as well as to the previous European patent application EP 2 962 825 by the present Applicant, the contents of which are fully incorporated herein by reference.

It is also worth pointing out that the elements of the invention, as well as their configuration or representation as shown in the drawings, can be combined as required into one or more embodiments, since they will not be limited to the examples shown in the drawings.

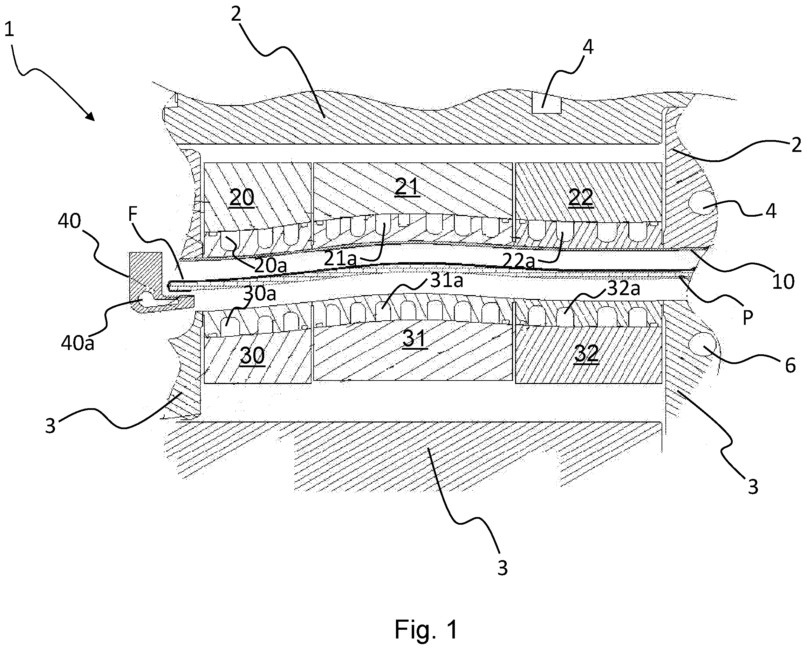

Therefore, in this description any reference to "an embodiment" will indicate that a particular configuration, structure or feature described in regard to an element is comprised in at least one embodiment. Furthermore, any particular configuration, structure or feature may be combined in one or more embodiments in any way deemed appropriate. The references below are therefore used only for simplicity's sake and do not limit the protection scope or extent of the invention. Therefore, in light of the above, a mould according to the invention, designated as a whole as 1, comprises two half-moulds 2 and 3, i.e. an upper mould and a lower mould, respectively, as shown in Figure 1. Of course, the half-moulds may have any shape and disposition depending on the parts to be manufactured; therefore, their designation as upper mould or lower mould is to be understood, for clarity, only as a reference to this drawing.

The half-moulds 2, 3 are provided with respective conditioning circuits 4, 6, consisting of a series of channels in which a hot or cold liquid circulates, depending on the operating phase of the cycle.

The half-moulds 2, 3 include inserts 20, 21, 22; 30, 31, 32; 40 of the type described in the patent application, i.e. consisting of blocks having appropriate shape and dimensions as a function of a part or panel P to be manufactured, which are thermally conditioned in an autonomous manner with respect to the half-moulds 2, 3. For this reason, the inserts are respectively provided with channels 20a, 21a, 22a; 30a, 31a, 32a; 40a; in which cold or hot liquid circulates, depending on the phase being executed while processing the panel P.

The latter is a thermoformable multilayer panel of a known type, e.g. intended for automotive use or the like, which in this case is configured with a corrugated profile, though it may generally have any configuration, e.g. flat, concave, convex, mixed, etc.

Figure 1 shows a process for manufacturing the panel P wherein the latter is also subjected to the so-called reflanging, i.e. folding a coating sheet F at an edge of the panel P (visible on the left in Figure 1). This should however be understood simply as an example, in that the invention is also applicable to other types of processes for manufacturing panels P that may not require any reflanging operation and/or any coating sheet or layer.

The panels to which the invention applies are, in general, thermoformable panels, whether single-layer or composite, that comprise at least one part, which may be a main core or another secondary part, made of synthetic material, e.g. thermoplastic or thermosetting foam, and, preferably but not necessarily, a laminated natural (leather, hide, fabric, etc.) or synthetic (plastic, resins, etc.) coating.

In accordance with the invention, between the panel P and at least one of the half-moulds 2 or 3 there is a compensation layer 10, which essentially consists of a sheet of material thermally stable to the operating temperatures of the mould, i.e. up to 150-250 °C.

The compensation layer 10 has a thickness of a few millimetres, preferably 1 to approx. 10 mm, more preferably 1 to 8 mm, and has good elasticity and hardness properties, so as to be flexible and soft and adaptable to both the profile of the panel P and the profile of the half-mould 2 and of the inserts 20-22 to which it adheres.

To achieve these effects, the compensation layer 10 preferably comprises at least one polymeric material; 20 usable materials include, among others, silicone-based elastomers, polytetrafluoroethylene (Teflon®), polyurethane-based resins, or resins based on other components.

It should also be pointed out that the compensation layer may be a composite one, i.e. obtained by overlaying two or more substrates, even of different materials, which together provide the above-mentioned properties.

Independently of the materials and configuration (simple or composite), the Applicant was able to evaluate that favourable results can be obtained by using a compensation layer 10 having an elasticity in the range of 50 to 500 (percent elongation) and a hardness in the range of 15 shore to 70 shore.

From a general viewpoint, the operation of the mould 1 is such that the inserts 20-22, 30-32 and 40 allow for fast heating and cooling of the mould areas in contact with the workpiece P, thus reducing the length of the thermal cycles and increasing the productivity of the mould 1.

In fact, the thermal conditioning of the inserts, obtained by circulating the liquid in the channels 20a-22a, 30a-32a and 40a, occurs independently of the thermal conditioning of the half-moulds 2 and 3, in the channels 4 and 6 of which a conditioning fluid circulates in different conditions.

Between the inserts 20-22, 30-32 and 40, and/or between one or more of them and the half-moulds 2, 3, there are gaps to comply with the thermal expansion occurring while processing the workpiece P.

However, unlike the prior art, the presence of the compensation layer 10 between the part or panel P and the inserts 20-22 and the half-mould 2 will prevent the latter from leaving marks or impressions on the former, which would be detrimental for the surface finish thereof.

In this frame, it must be pointed out, in fact, that the soft and flexible compensation layer or sheet 10 can cover the aforementioned gaps between the inserts 20-22 and/or the half-mould 2 on one side, while on the other side, i.e. the side facing towards the panel P, the compensation layer 10 will maintain the profile and geometry of the part P to be moulded, thus ensuring the attainment of the desired dimensional tolerances and surface finish.

According to one embodiment of the invention, the compensation layer 10 is applied onto the half-mould 2 and the inserts 20-22 by pouring its polymer in liquid condition and by distributing it evenly over the areas involved. It is then left to cure as long as necessary. In this manner, the compensation layer will adapt itself at best to the half-mould 2 and to the inserts 20-22, thus ensuring the required precision of the mould.

Other solutions are nonetheless also possible for forming and/or applying the compensation layer 10, also depending on the shape and/or dimensions of the parts to be moulded; there may also be cases wherein the compensation layer 10 is obtained separately as a film, which is then applied onto the surface of interest.

In this context, it must be pointed out that, in the example illustrated in the drawings, the compensation layer 10 is applied onto the upper half-mould 2, in that this is the one that acts upon the face of the panel P that carries the coating sheet F; however, the compensation layer 10 may be applied onto the lower half-mould 3 or both half-moulds, depending on the workpieces involved, and not only in relation to whether there is or nor an external finishing sheet F on the panel P to be processed.

Likewise, the presence of the inserts 20-22, 30-32 and 40 on both half-moulds, though preferable, is nevertheless not mandatory, and moulds may be used wherein the number of inserts is different between the half-moulds 2, 3, or wherein only one of the latter is fitted with inserts as previously described.

It will also be apparent that, although reference has been made herein to panels for automotive use, the invention is generally applicable to the hot processing of pieces having any shape, not only of panels for the automotive industry.

## Claims

1. Mould for processing thermoformable panels or workpieces (P), comprising at least one first and one second half-moulds (2, 3), between which a workpiece (P) can be placed, inserts (20-22, 30-32, 40) arranged in at least one of the half-moulds (2, 3) in an area of contact with the workpiece (P), means (20a-22a, 30a-32a, 40a) for circulating a thermal conditioning fluid in the inserts (20-22, 30-32, 40), **characterized in that** the mould comprises a compensation layer (10) to be interposed between the workpiece (P) and a surface of the mould and of the inserts (20-22, 30-32, 40), wherein the compensation layer (10) is adapted to prevent the formation of marks and/or impressions of the inserts (20-22, 30-32, 40) on the surface (F) of the workpiece (P), by compensating for, or absorbing, any discontinuities due to gaps between the inserts (20-22, 30-32, 40) or between the inserts (20-22, 30-32, 40) and the rest of the mould.

2. Mould according to claim 1, wherein the compensation layer (10) is applied onto the insert (20-22, 30-32, 40) and onto the associated half-mould (2, 3).

3. Mould according to claims 1 or 2, wherein the compensation layer (10) is of the polymeric type.

4. Mould according to any one of the preceding claims, wherein the thickness of the compensation layer (10) is in the range of 1 to 10 mm.

5. Mould according to any one of the preceding claims, wherein the compensation layer (10) comprises at least one of the following materials: silicone-based elastomer, polytetrafluoroethylene (Teflon®), polyurethane-based resins, or resins based on other components.

6. Mould according to claim 3, wherein the compensation layer (10) is applied onto said at least one of the half-moulds (2) and the inserts (20-22) by pouring the compensation layer (10) of polymeric type in liquid condition, by distributing it evenly over areas involved and by subsequently leaving it to cure as long as necessary.

7. Method for processing a thermoformable workpiece (P) in a mould (1) comprising at least one pair of half-moulds (2, 3), wherein in at least one of which there are thermally conditioned inserts (20-22, 30-32, 40), **characterized in that** between the workpiece (P) and a surface of the mould and of the inserts (20-22, 30-32, 40) at least one compensation layer (10) is interposed, wherein the compensation layer (10) is adapted to prevent the formation of marks and/or impressions of the insert (20-22, 30-32, 40) on the surface (F) of the workpiece (P), by compensating for, or absorbing, any discontinuities due to gaps between the inserts (20-22, 30-32, 40) or between the inserts (20-22, 30-32, 40) and the rest of the mould.

8. Method according to claim 7, comprising a step of applying the compensation layer (10) directly onto the insert (20-22, 30-32, 40) and onto the associated half-mould (2, 3).

9. Method according to claims 7 or 8, wherein the insert (20-22, 30-32, 40) is thermally conditioned at temperatures between 25 °C and 150 °C.

10. Method according to any one of the preceding method claims, wherein the thermal conditioning of the insert (20-22, 30-32, 40) is effected by heating and cooling it substantially separately from the associated half-mould (2, 3).

11. Method according to any one of claims 7 to 10, wherein the compensation layer (10) is applied onto said at least one of the half-moulds (2) and the inserts (20-22) by pouring a polymer of the compensation layer (10) in liquid condition, by distributing it evenly over areas involved and by subsequently leaving it to cure as long as necessary.

## Patentansprüche

1. Form zur Verarbeitung von thermoformbaren Platten oder Werkstücken (P), umfassend mindestens eine erste und eine zweite Halbform (2, 3), zwischen denen ein Werkstück (P) platziert werden kann, Einsätze (20-22, 30-32, 40), die in mindestens einer der Halbformen (2, 3) in einem Kontaktbereich mit dem Werkstück (P) angeordnet sind, Mittel (20a-22a, 30a-32a, 40a) zum Zirkulieren eines Wärmekonditionierungsfluids in den Einsätzen (20-22, 30-32, 40),
**dadurch gekennzeichnet, dass** die Form eine Kompensationsschicht (10) umfasst, die zwischen dem Werkstück (P) und einer Oberfläche der Form und der Einsätze (20-22, 30-32, 40) angeordnet ist, wobei die Kompensationsschicht (10) angepasst ist, um die Bildung von Markierungen und/oder Abdrücken der Einsätze (20-22, 30-32, 40) auf der Oberfläche (F) des Werkstücks (P) zu verhindern, indem etwaige Unstetigkeiten wegen Lücken zwischen den Einsätzen (20-22, 30-32, 40) oder zwischen den Einsätzen (20-22, 30-32, 40) und dem Rest der Form kompensiert oder absorbiert werden.

2. Form nach Anspruch 1, wobei die Kompensationsschicht (10) auf den Einsatz (20-22, 30-32, 40) und auf die assoziierte Halbform (2, 3) aufgebracht wird.

3. Form nach Anspruch 1 oder 2, wobei die Kompensationsschicht (10) vom polymeren Typ ist.

4. Form nach einem der vorhergehenden Ansprüche, wobei die Dicke der Kompensationsschicht (10) im Bereich von 1 bis 10 mm liegt.

5. Form nach einem der vorhergehenden Ansprüche, wobei die Kompensationsschicht (10) mindestens eines der folgenden Materialien umfasst: Elastomer auf Silikonbasis, Polytetrafluorethylen (Teflon®), Harze auf Polyurethanbasis oder Harze auf Basis anderer Komponenten.

6. Form nach Anspruch 3, wobei die Kompensationsschicht (10) auf die mindestens eine der Halbformen (2) und die Einsätze (20-22) durch Gießen der Kompensationsschicht (10) vom polymeren Typ in flüssigem Zustand, durch deren gleichmäßige Verteilung auf die betroffenen Bereiche und anschließende so lange wie nötige Aushärtung aufgebracht wird.

7. Verfahren zur Verarbeitung eines thermoformbaren Werkstücks (P) in einer Form (1) umfassend mindestens ein Paar von Halbformen (2, 3), wobei in mindestens einer davon thermisch konditionierte Einsätze (20-22, 30-32, 40) vorhanden sind, **dadurch gekennzeichnet, dass** mindestens eine Kompensationsschicht (10) zwischen dem Werkstück (P) und einer Oberfläche der Form und der Einsätze (20-22, 30-32, 40) angeordnet ist, wobei die Kompensationsschicht (10) angepasst ist, um die Bildung von Markierungen und/oder Abdrücken des Einsatzes (20-22, 30-32, 40) auf der Oberfläche (F) des Werkstücks (P) zu verhindern, indem etwaige Unstetigkeiten wegen Lücken zwischen den Einsätzen (20-22, 30-32, 40) oder zwischen den Einsätzen (20-22, 30-32, 40) und dem Rest der Form kompensiert oder absorbiert werden.

8. Verfahren nach Anspruch 7, umfassend einen Schritt zum Aufbringen der Kompensationsschicht (10) direkt auf den Einsatz (20-22, 30-32, 40) und auf die assoziierte Halbform (2, 3).

9. Verfahren nach Anspruch 7 oder 8, wobei der Einsatz (20-22, 30-32, 40) bei Temperaturen zwischen 25 °C und 150 °C thermisch konditioniert ist.

10. Verfahren nach einem der vorhergehenden Verfahrensansprüche, wobei die thermische Konditionierung des Einsatzes (20-22, 30-32, 40) durch Erhitzen und Abkühlen im Wesentlichen getrennt von der assoziierten Halbform (2, 3) erfolgt.

11. Verfahren nach einem der Ansprüche 7 bis 10, wobei die Kompensationsschicht (10) auf die mindestens eine der Halbformen (2) und die Einsätze (20-22) durch Gießen eines Polymers der Kompensationsschicht (10) in flüssigem Zustand, durch deren gleichmäßige Verteilung auf die betroffenen Bereiche und anschließende so lange wie nötige Aushärtung aufgebracht wird.

## Revendications

1. Moule pour le traitement de panneaux ou pièces de fabrication (P) thermoformables, comprenant au moins un premier et un second demi-moules (2, 3), entre lesquels une pièce de fabrication (P) peut être placée, des inserts (20-22, 30-32, 40) disposés dans au moins l'un des demi-moules (2, 3) dans une zone de contact avec la pièce de fabrication (P), des moyens (20a-22a, 30a-32a, 40a) servant à faire circuler un fluide de conditionnement thermique dans les inserts (20-22, 30-32, 40),
**caractérisé en ce que** le moule comprend une couche de compensation (10) à interposer entre la pièce de fabrication (P) et une surface du moule et des inserts (20-22, 30-32, 40), dans lequel la couche de compensation (10) est adaptée pour empêcher la formation de marques et/ou d'empreintes des inserts (20-22, 30-32, 40) sur la surface (F) de la pièce de fabrication (P), en compensant ou en absorbant toute discontinuité due à des espaces entre les inserts (20-22, 30-32, 40) ou entre les inserts (20-22, 30-32, 40) et le reste du moule.

2. Moule selon la revendication 1, dans lequel la couche de compensation (10) est appliquée sur l'insert (20-22, 30-32, 40) et sur le demi-moule (2, 3) associé.

3. Moule selon la revendication 1 ou 2, dans lequel la couche de compensation (10) est de type polymère.

4. Moule selon l'une quelconque des revendications précédentes, dans lequel l'épaisseur de la couche de compensation (10) est comprise entre 1 et 10 mm.

5. Moule selon l'une quelconque des revendications précédentes, dans lequel la couche de compensation (10) comprend au moins l'un des matériaux suivants : élastomère à base de silicone, polytétrafluoroéthylène (Téflon®), résines à base de polyuréthane ou résines à base d'autres composants.

6. Moule selon la revendication 3, dans lequel la couche de compensation (10) est appliquée sur ledit au moins un des demi-moules (2) et les inserts (20-22) en versant la couche de compensation (10) de type polymère à l'état liquide, en la répartissant uniformément sur les zones concernées et en la laissant ensuite durcir aussi longtemps que nécessaire.

7. Procédé de traitement d'une pièce de fabrication (P) thermoformable dans un moule (1) comprenant au moins une paire de demi-moules (2, 3), dans lequel dans au moins l'un d'entre eux se trouvent des inserts (20-22, 30-32, 40) conditionnés thermiquement, **caractérisé en ce qu'**entre la pièce de fabrication (P) et une surface du moule et les inserts (20-22, 30-32, 40) est interposée au moins une couche de compensation (10), dans lequel la couche de compensation (10) est adaptée pour empêcher la formation de marques et/ou d'empreintes de l'insert (20-22, 30-32, 40) sur la surface (F) de la pièce de fabrication (P), en compensant ou en absorbant toute discontinuité due à des espaces entre les inserts (20-22, 30-32, 40) ou entre les inserts (20-22, 30-32, 40) et le reste du moule.

8. Procédé selon la revendication 7, comprenant une étape consistant à appliquer la couche de compensation (10) directement sur l'insert (20-22, 30-32, 40) et sur le demi-moule (2, 3) associé.

9. Procédé selon la revendication 7 ou 8, dans lequel l'insert (20-22, 30-32, 40) est conditionné thermiquement à des températures entre 25 et 150 °C.

10. Procédé selon l'une quelconque des revendications de procédé précédentes, dans lequel le conditionnement thermique de l'insert (20-22, 30-32, 40) est effectué en le chauffant et en le refroidissant substantiellement séparément du demi-moule (2, 3) associé.

11. Procédé selon l'une quelconque des revendications 7 à 10, dans lequel la couche de compensation (10) est appliquée sur ledit au moins un des demi-moules (2) et les inserts (20-22) en versant un polymère de la couche de compensation (10) à l'état liquide, en le répartissant uniformément sur les zones concernées et en le laissant ensuite durcir aussi longtemps que nécessaire.
